# EUROPEAN PATENT APPLICATION

(11) **EP 3 820 035 A1**
(43) Date of publication of application: **12.05.2021**
(21) Application number: 19830317.4
(22) Date of filing: 01.07.2019
(51) Int. Cl.: H02M 3/155, H02M 3/28

(54) **POWER CONVERSION DEVICE AND CONTROL METHOD FOR POWER CONVERSION DEVICE**

(30) Priority: 03.07.2018 JP 2018126796
(71) Applicant: National University Corporation Chiba University, Chiba-shi, Chiba 263-8522 (JP); OMRON Corporation, Shiokoji-dori, Shimogyo-ku, Kyoto-shi Kyoto 600-8530 (JP)
(72) Inventor: SEKIYA, Hiroo, Chiba-shi, Chiba 263-8522 (JP); NAGAOKA, Shingo, Kyoto-shi, Kyoto 600-8530 (JP); ONISHI, Hiroyuki, Kyoto-shi, Kyoto 600-8530 (JP); ZAITSU, Toshiyuki, Kyoto-shi, Kyoto 600-8530 (JP); TAKATORI, Koji, Kyoto-shi, Kyoto 600-8530 (JP)
(74) Representative: Horn Kleimann Waitzhofer Patentanwälte PartG mbB
(86) International application number: PCT/JP2019/026035
(87) International publication number: WO 2020/009052

(57) **Abstract**

Provided is a power conversion device having a broad operating range in which ZVS is possible. The power conversion device comprises a semiconductor switch and a reverse-parallel diode. Resonance causes the voltage applied to both ends of the semiconductor switch to change over time. In the power conversion device, the semiconductor switch is turned off at each set cycle and, on the basis of detection results for a physical quantity correlating to the current that flows through the reverse-parallel diode, the semiconductor switch is turned on from when current starts to flow to the reverse-parallel diode until the current that flows through the reverse-parallel diode reaches "0."

## Description

### FIELD

The present invention relates to a power conversion device and a control method for the power conversion device.

### BACKGROUND

As a power conversion device that implements ZVS (zero-voltage switching) with a simple circuit configuration, a power conversion device is known, which includes a semiconductor switch and an antiparallel diode in antiparallel connection to the semiconductor switch, and in which a voltage applied to both ends of the semiconductor switch is varied over time by resonance (for example, see Patent Document 1).

Such a power conversion device implements ZVS in a relatively narrow operating area.

### [Document of Related Art]

### [Patent Document]

[Patent Document 1] Japanese Translation of PCT Application No. JP H06-505844

### SUMMARY

The present invention has been devised in view of the problem, and an object of the present invention is to provide a technique capable of extending an operating range that implements ZVS for a power conversion device, which includes a semiconductor switch and an antiparallel diode in antiparallel connection to the semiconductor switch, and in which a voltage applied to both ends of the semiconductor switch is varied over time by resonance.

In order to attain the object, a power conversion device, which includes a semiconductor switch and an antiparallel diode in antiparallel connection to the semiconductor switch, and in which a voltage applied to both ends of the semiconductor switch is varied over time by resonance according to an aspect of the present invention, further includes: control means for turning on/off the semiconductor switch; and detecting means for detecting a physical quantity in correlation with a current passing through the antiparallel diode, wherein the control means turns off the semiconductor switch in each setting period, and the control means turns on the semiconductor switch, which has been turned off, at a time between when a current starts passing through the antiparallel diode and when the current passing through the antiparallel diode falls to "0", on the basis of a detection result of the physical quantity detected by the detecting means.

In other word, instead of turning on/off the semiconductor switch with a fixed duty ratio like a conventional power conversion device, the power conversion device according to the aspect of the present invention turns on the semiconductor switch at a time between when a current starts passing through the antiparallel diode and when the current passing through the antiparallel diode falls to "0", on the basis of the detection result of the physical quantity detected by the detecting means for detecting the physical quantity in correlation with the current passing through the antiparallel diode. The voltage of the semiconductor switch is substantially "0" from the time when a current starts passing through the antiparallel diode to the time when the current passing through the antiparallel diode falls to "0". Hence, the power conversion device according to the aspect of the present invention implements ZVS in an operating area where ZVS is not achieved by conventional control.

The power conversion device can be implemented as various devices including an inverter (e.g., a class E inverter), an insulating DC/DC converter, and a non-insulated DC/DC converter with different specific configurations and uses. The detecting means of the power conversion device only needs to detect a physical quantity in correlation with a current passing through the antiparallel diode. Thus, the detecting means may be means for detecting the magnitude of a current passing through the antiparallel diode. The detecting means may be means for detecting a voltage to each of both ends of a resistor connected in series with the antiparallel diode and the semiconductor switch or means for detecting a voltage generated by a voltage across the antiparallel diode or the on resistance of the semiconductor switch. The semiconductor switch may be turned on at a time between when a current starts passing through the antiparallel diode and when the current passing through the antiparallel diode falls to "0". Thus, the control means of the power conversion device may turn on the semiconductor switch, which has been turned off, when a current starts passing through the antiparallel diode.

A control method for a power conversion device, which includes a semiconductor switch and an antiparallel diode in antiparallel connection to the semiconductor switch, and in which a voltage applied to both ends of the semiconductor switch is varied over time by resonance according to an aspect of the present invention, includes: turning off the semiconductor switch in each setting period; detecting a physical quantity in correlation with a current passing through the antiparallel diode; and turning on the semiconductor switch, which has been turned off, at a time between when a current starts passing through the antiparallel diode and when the current passing through the antiparallel diode falls to "0", on the basis of the detection result of the physical quantity. Hence, the control method for the power conversion device implements ZVS in an operating area where ZVS is not achieved by conventional control.

The present invention can extend the operating area that implements ZVS for the power conversion device.

### BRIEF DESCRIPTION OF THE DRAWINGS

Fig. 1 is an explanatory drawing illustrating a configuration example of a power conversion device according to an embodiment of the present invention;
Fig. 2A is an explanatory drawing illustrating another configuration example of a resonant voltage-converter circuit;
Fig. 2B is an explanatory drawing illustrating another configuration example of the resonant voltage-converter circuit;
Fig. 2C is an explanatory drawing illustrating another configuration example of the resonant voltage-converter circuit;
Fig. 3 is an explanatory drawing showing the relationship among Vₒ/Vₒₙₒₘ, f/fₙₒₘ, and R_{L}/R_{Lnom} when the resonant voltage-converter circuit is controlled by conventional control;
Fig. 4A is an explanatory drawing of the operations of the resonant voltage-converter circuit according to the conventional control;
Fig. 4B is an explanatory drawing of the operations of the resonant voltage-converter circuit according to the conventional control;
Fig. 4C is an explanatory drawing of the operations of the resonant voltage-converter circuit according to the conventional control;
Fig. 5 is an explanatory drawing indicating the contents of control a controller;
Fig. 6 is an explanatory drawing showing the relationship among Vₒ/Vₒₙₒₘ, f/fₙₒₘ, and R_{L}/R_{Lnom} when the resonant voltage-converter circuit is controlled by the controller;
Fig. 7 is an explanatory drawing illustrating a modification of the power conversion device according to the embodiment; and
Fig. 8 is an explanatory drawing illustrating another modification of the power conversion device according to the embodiment.

### DESCRIPTION OF EMBODIMENTS

An embodiment of the present invention will be described below with reference to the accompanying drawings.

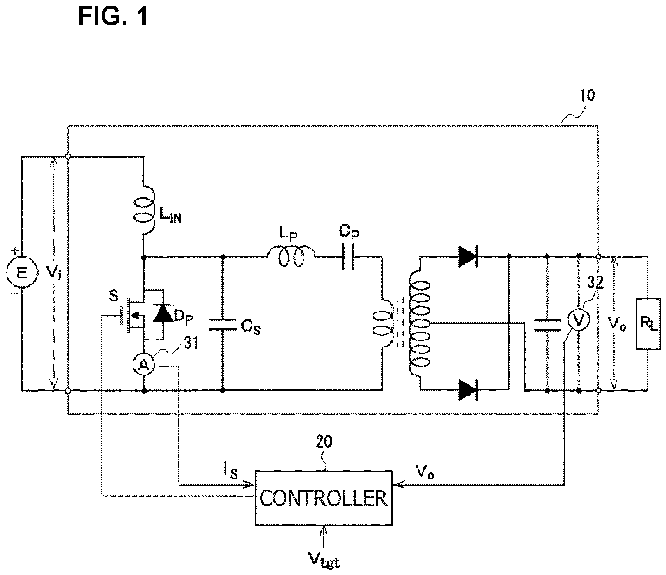

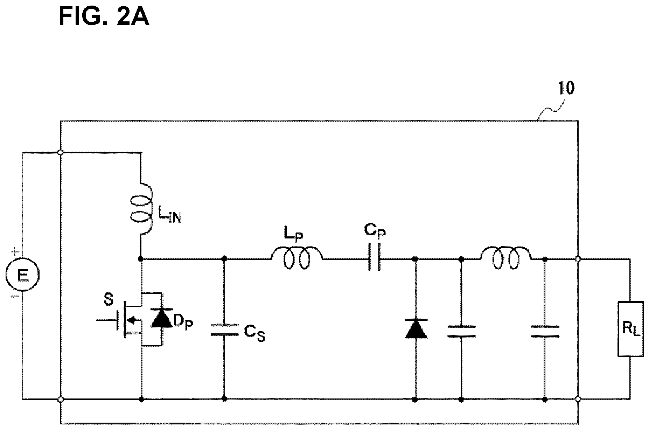

First, referring to Figs. 1 and 2A to 2C, the configuration of a power conversion device according to an embodiment of the present invention will be described below. Fig. 1 is an explanatory drawing illustrating a configuration example of the power conversion device according to the present embodiment. Figs. 2A to 2C are explanatory drawings illustrating configuration examples of a resonant voltage-converter circuit 10 that is usable as a constituent element of the power conversion device according to the embodiment.

As illustrated in Fig. 1, the power conversion device according to the present embodiment includes the resonant voltage-converter circuit 10 and a controller 20. The resonant voltage-converter circuit 10 includes a semiconductor switch S and an antiparallel diode Dp in antiparallel connection to the semiconductor switch S, in which a voltage applied to both ends of the semiconductor switch S is varied over time by resonance. The antiparallel diode Dp is not necessarily provided as a device different from the semiconductor switch S. If the semiconductor switch S includes a parasitic diode (e.g., an FET), the parasitic diode may be provided as the antiparallel diode Dp.

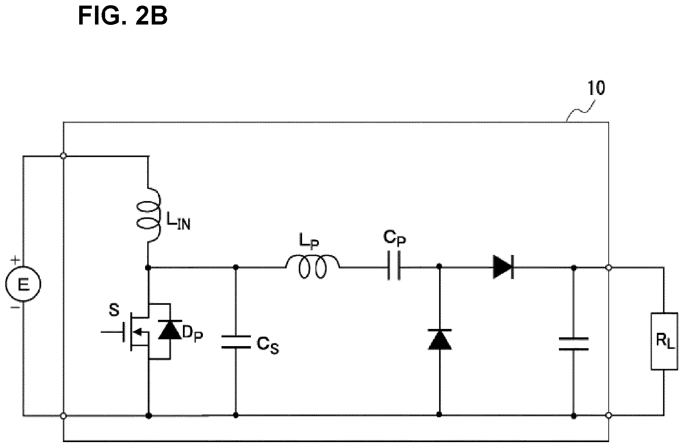

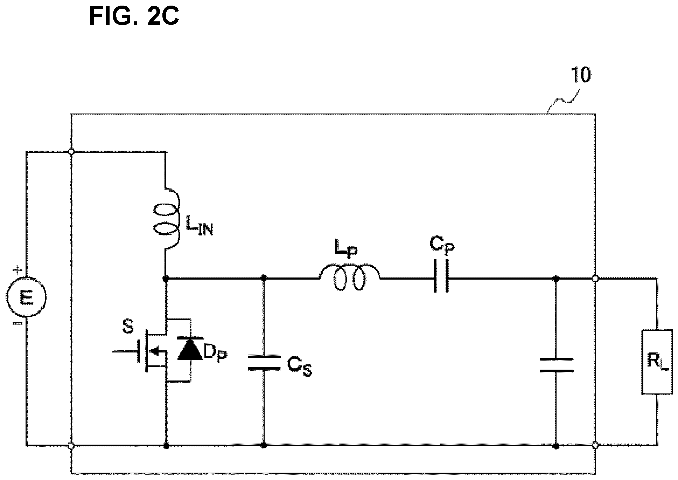

The resonant voltage-converter circuit 10 in Fig. 1 is an insulating DC/DC converter (a DC/DC converter with the primary side and the secondary side insulated from each other by a transformer). The resonant voltage-converter circuit 10 used as a constituent element of the power conversion device may be any circuit including the semiconductor switch S and the antiparallel diode Dp in antiparallel connection to the semiconductor switch S, in which a voltage applied to both ends of the semiconductor switch S is varied over time by resonance. Thus, the resonant voltage-converter circuit 10 may be a non-insulated DC/DC converter having a circuit configuration illustrated in Fig. 2A or 2B. The resonant voltage-converter circuit 10 may be an LLC resonant DC/DC converter. Alternatively, the resonant voltage-converter circuit 10 may be an inverter circuit having a circuit configuration illustrated in Fig. 2C.

As illustrated in Fig. 1, a voltage sensor 32 for measuring an output voltage Vₒ of the resonant voltage-converter circuit 10 is attached to the resonant voltage-converter circuit 10. Moreover, a detecting section 31 for detecting a current Is passing through the antiparallel diode Dp is attached to the resonant voltage-converter circuit 10. The detecting section 31 only needs to detect the presence or absence of current passing through the antiparallel diode D_{P}. Thus, the detecting section 31 in Fig. 1 may be replaced with a detecting section for detecting a current value or a voltage value at another point of the resonant voltage-converter circuit 10. In the following description, the detecting section 31 acts as a current sensor (Fig. 1) for detecting the current I_{S}.

The controller 20 is a unit for controlling (ON/OFF) the semiconductor switch S so as to set the output voltage Vₒ at a target voltage V_{tgt} based on the current Is detected by the detecting section 31, the output voltage Vₒ measured by the voltage sensor 32, and the target voltage V_{tgt}. The controller 20 according to the present embodiment is a device including, as a main constituent element, a microcontroller for controlling a DC/DC converter. However, the controller 20 may have any hardware configuration as long as the resonant voltage-converter circuit 10 can be controlled as will be described later.

Before a description of the contents of control on the resonant voltage-converter circuit 10 (semiconductor switch S) by the controller 20, conventional control performed on the resonant voltage-converter circuit 10 will be described below.

For the control of the resonant voltage-converter circuit 10, the following control is typically used: "the semiconductor switch S is turned on/off with a fixed duty ratio while a switching frequency is changed so as to set the output voltage Vₒ to the target voltage" (hereinafter, will be denoted as conventional control).

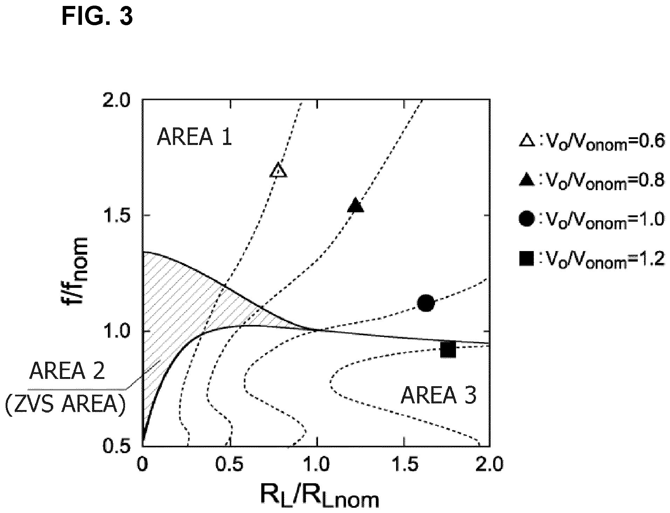

Fig. 3 shows the relationship among Vₒ/Vₒₙₒₘ, f/fₙₒₘ, and R_{L}/R_{Lnom} when the resonant voltage-converter circuit 10 is controlled by the conventional control. Vₒ, f, and R_{L} denote an output voltage, a switching frequency, and a load R_{L}, respectively, in the resonant voltage-converter circuit 10. Furthermore, Vₒₙₒₘ, fₙₒₘ, and R_{Lnom} denote a Vₒ value, an f value, and an R_{L} value, respectively, in an optimum state of the design.

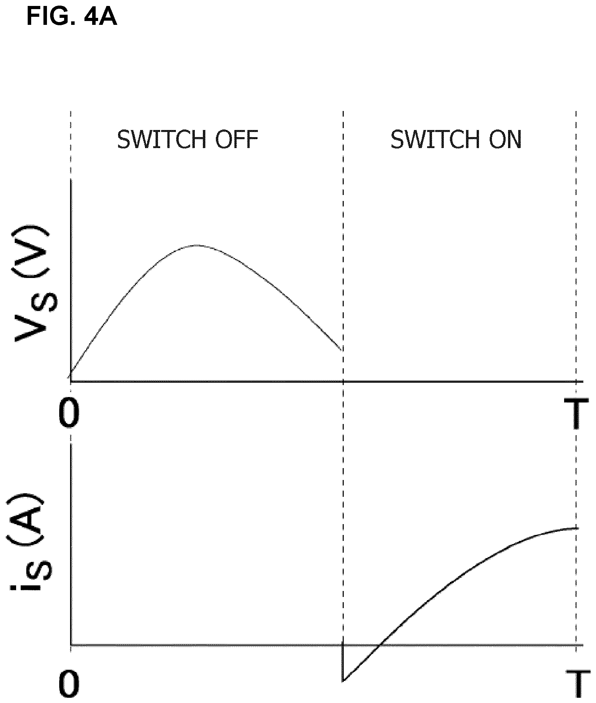

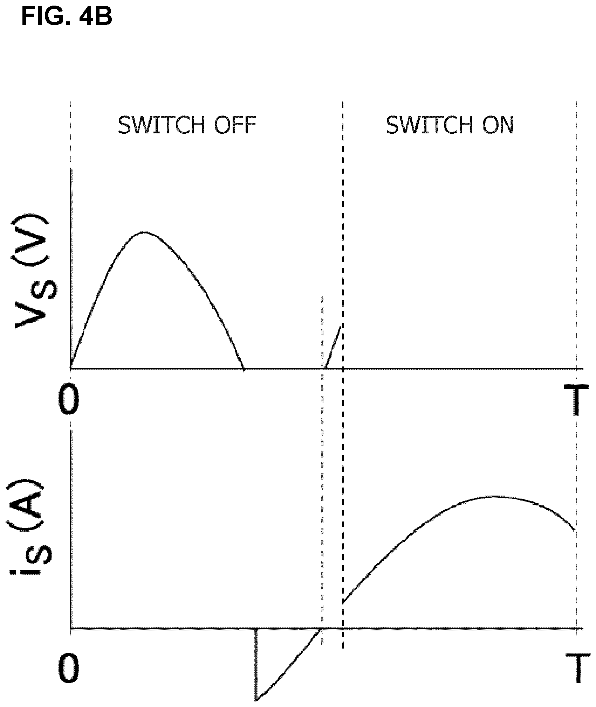

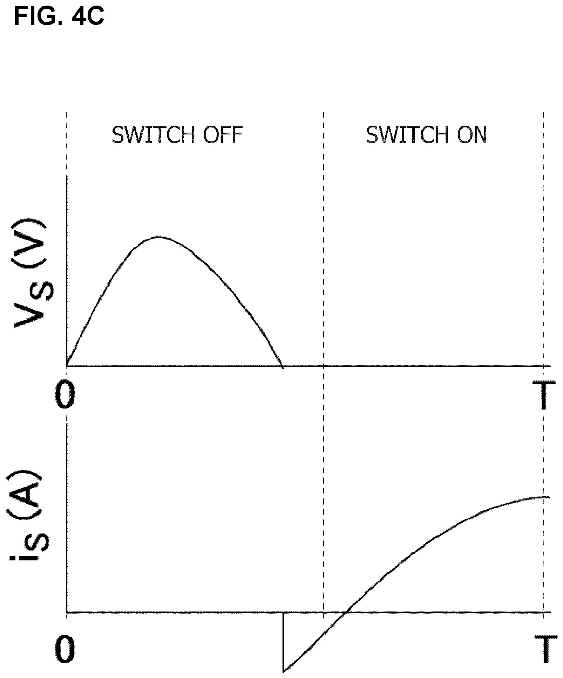

"Area 1" and "area 3" in Fig. 3 are areas where a switching loss is generated in the absence of ZVS (zero volt switching). More specifically, as shown in Fig. 4A, area 1 is an area where the semiconductor switch S is turned on before a voltage Vs across the semiconductor switch S falls to "0". As shown in Fig. 4B, area 3 is an area where the semiconductor switch S is turned on after the voltage Vs at "0" starts rising again. Moreover, "area 2" in Fig. 3 is a ZVS area for ZVS, that is, an area where the semiconductor switch S is turned on when the voltage Vs is "0" as shown in Fig. 4C.

As is evident from Fig. 3, in the conventional control, ZVS cannot be performed at any switching frequency f when a Vₒ/Nₒₙₒₘ value is 1.0 or larger, and even if the Vₒ/Nₒₙₒₘ value is less than 1.0, ZVS can be performed only in an extremely narrow operating area. Moreover, in the conventional control, the switching frequency f may not be uniquely determined (see dotted lines in Fig. 3) depending upon the combination of a resistance value R_{L} and the output voltage Vₒ, so that frequency control is difficult.

The contents of control on the resonant voltage-converter circuit 10 by the controller 20 will be described below.

The control on the resonant voltage-converter circuit 10 by the controller 20 is basically performed such that "the semiconductor switch S is turned on/off while a switching frequency is changed so as to set the output voltage Vₒ to the target voltage V_{tgt}". The controller 20 monitors (stands by) the start of a current passing through the antiparallel diode D_{P} based on the output of the detecting section 31 after the semiconductor switch S is turned off. The controller 20 turns on the semiconductor switch S when a current starts passing through the antiparallel diode D_{P}. The semiconductor switch S may be turned on at any time between the time when current starts passing through the antiparallel diode D_{P} and the time when the current passing through the antiparallel diode D_{P} falls to "0". Thus, the semiconductor switch S may be turned on when, for example, the current I_{S} is somewhat close to "0" after current starts passing through the antiparallel diode D_{P}.

Specifically, when the semiconductor switch S of the resonant voltage-converter circuit 10 (Fig. 1) is turned off, a charging current passes through a capacitor Cs. Subsequently, the capacitor Cs is discharged by the resonance of a reactor Lp and a capacitor Cp. After the capacitor Cs is discharged, a current starts passing through the antiparallel diode Dp. The voltage Vs across the semiconductor switch S is kept at "0" until the current passing through the antiparallel diode Dp falls to "0" (see Figs. 4B and 4C). Thus, ZVS can be achieved by turning on the semiconductor switch S at any time between the time when a current starts passing through the antiparallel diode D_{P} and the time when the current passing through the antiparallel diode D_{P} falls to "0".

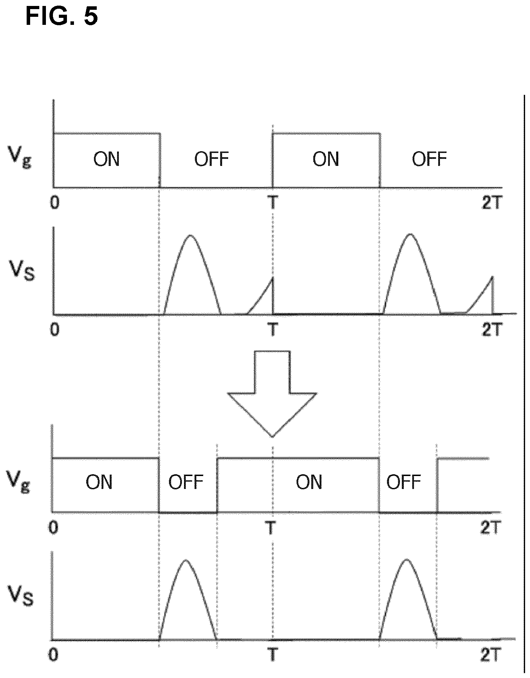

As described above, instead of turning on/off the semiconductor switch S with a fixed duty ratio, the controller 20 of the power conversion device according to the present embodiment turns on the semiconductor switch S at any time between the time when a current starts passing through the antiparallel diode D_{P} and the time when the current passing through the antiparallel diode D_{P} falls to "0". Hence, as indicated in the lower part of Fig. 5, the control by the controller 20 enables ZVS in an operating area where ZVS is not achieved by the conventional control as indicated in the upper part of Fig. 5.

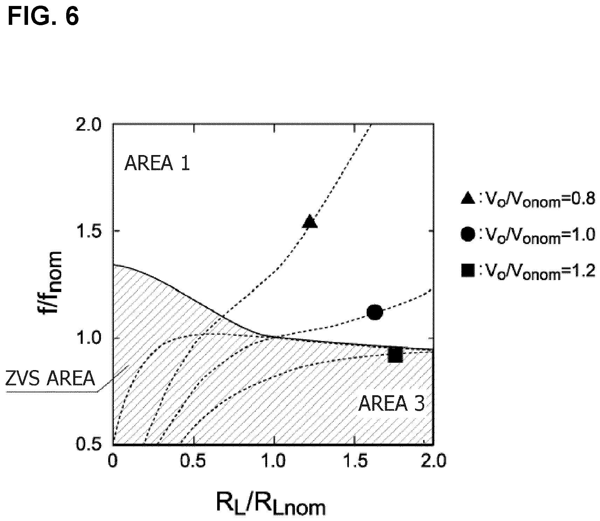

The operating area where the control by the controller 20 enables ZVS is "area 3" in Fig. 3. Hence, according to the control by the controller 20, the operating area where ZVS is enabled is extended by the range of area 3 from that of the conventional control as indicated in Fig. 6. Thus, according to the power conversion device including the controller 20 of the present embodiment, the operating area where ZVS is enabled is larger than that of the conventional control, and the power conversion device acts as a device capable of keeping ZVS even if disturbance (e.g., fluctuations in input voltage) occurs at a level where ZVS cannot be kept by a conventional device.

Furthermore, under the control of the controller 20, a monotone increase can be provided between the switching frequency f and a load resistance R_{L} (a characteristic of a monotone increase in f according to an increase in R_{L}) in all ZVS areas corresponding to area 2 + area 3 (see Fig. 6). Hence, the power conversion device according to the present embodiment also acts as a device provided without the need to limit an operating area even if frequency control is difficult (the switching frequency f is not uniquely determined).

### [Modification]

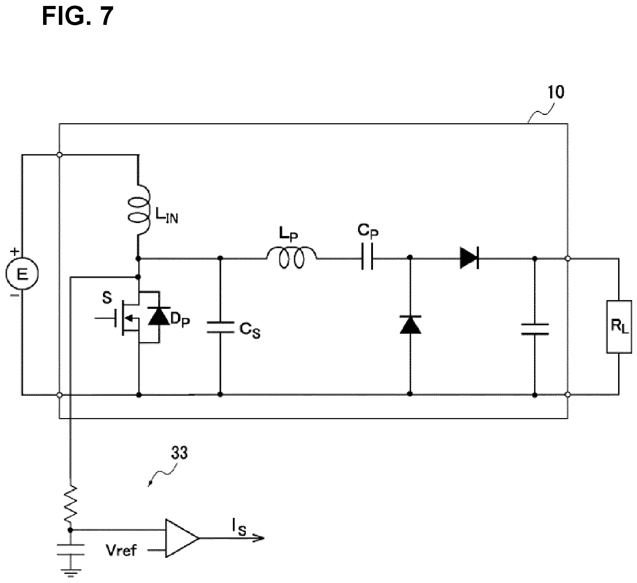

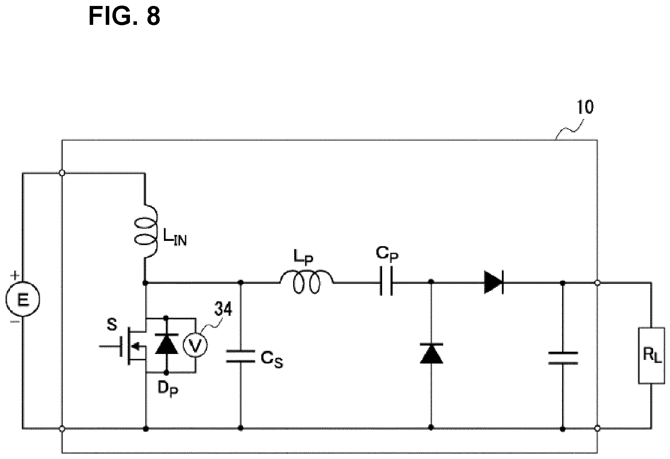

The power conversion device according to the embodiment can be modified in various ways. For example, the detecting section 31 may be replaced with a detecting section 33 configured as illustrated in Fig. 7, that is, the detecting section 33 that detects a forward voltage of the antiparallel diode D_{P}, the forward voltage being generated when the current I_{S} passes through the antiparallel diode D_{P}. As indicated in Fig. 8, the detecting section 31 may be replaced with a detecting section 34 that detects a voltage across the semiconductor switch S and the antiparallel diode D_{P} (a voltage generated by the on resistance of the semiconductor switch S).

The controller 20 of the power conversion device may be modified to a device that performs the contents of control when predetermined conditions are satisfied and performs another control (for example, control for turning on/off the semiconductor switch S with a fixed duty ratio) when the predetermined conditions are not satisfied. Whether the predetermined conditions are satisfied or not is determined by, for example, an output voltage or an input voltage.

The power conversion device may be modified to a device having a switching frequency that is controlled (changed) to set an output current or output power at a target value. Moreover, in the resonant voltage-converter circuit 10 illustrated in Figs. 1 and 2A to 2C, an MOSFET is used as the semiconductor switch S. Naturally, the semiconductor switch S may be a semiconductor switch (e.g., an IGBT) other than MOSFETs.

### <<Appendix>>

(1) A power conversion device (10, 20), which includes a semiconductor switch (S) and an antiparallel diode (D_{P}) in antiparallel connection to the semiconductor switch (S), and in which a voltage applied to both ends of the semiconductor switch (S) is varied over time by resonance,
the power conversion device further including:
control means (20) for turning on/off the semiconductor switch (S); and
detecting means (31;33;34) for detecting a physical quantity in correlation with a current passing through the antiparallel diode (D_{P}), wherein
the control means (20) turns off the semiconductor switch (S) in each setting period, and
the control means (20) turns on the semiconductor switch (S), which has been turned off, at a time between when a current starts passing through the antiparallel diode (D_{P}) and when the current passing through the antiparallel diode (D_{P}) falls to "0", on the basis of a detection result of the physical quantity detected by the detecting means (31;33;34).

### [Reference Signs List]

- 10: Resonant voltage-converter circuit
- 20: Controller
- 31, 33, 34: Detecting section
- 32: Voltage sensor

## Claims

1. A power conversion device, which comprises a semiconductor switch and an antiparallel diode in antiparallel connection to the semiconductor switch, and in which a voltage applied to both ends of the semiconductor switch is varied over time by resonance, the power conversion device further comprising:
control means for turning on/off the semiconductor switch; and
detecting means for detecting a physical quantity in correlation with a current passing through the antiparallel diode, wherein
the control means
turns off the semiconductor switch in each setting period, and
turns on the semiconductor switch, which has been turned off, at a time between when a current starts passing through the antiparallel diode and when the current passing through the antiparallel diode falls to "0", on the basis of a detection result of the physical quantity detected by the detecting means.

2. The power conversion device according to claim 1, wherein the control means changes the setting period so as to set any of an output voltage, an output current, and output power of the power conversion device at a target value.

3. The power conversion device according to claim 1 or 2, wherein the detecting means detects a voltage at each of both ends of a resistor connected in series with the antiparallel diode and the semiconductor switch.

4. The power conversion device according to claim 1 or 2, wherein the detecting means detects a voltage generated by an on resistance of the semiconductor switch.

5. A control method for a power conversion device, which includes a semiconductor switch and an antiparallel diode in antiparallel connection to the semiconductor switch, and in which a voltage applied to both ends of the semiconductor switch is varied over time by resonance, the method comprising:
turning off the semiconductor switch in each setting period;
detecting a physical quantity in correlation with a current passing through the antiparallel diode; and
turning on the semiconductor switch, which has been turned off, at a time between when a current starts passing through the antiparallel diode and when the current passing through the antiparallel diode falls to "0", on the basis of on a detection result of the physical quantity.

6. The control method for controlling a power conversion device according to claim 5, further comprising changing the setting period so as to set any of an output voltage, an output current, and output power of the power conversion device at a target value.
